# EUROPÄISCHE PATENTSCHRIFT

(11) **EP 1 958 421 B1**
(45) Veröffentlichungstag und Bekanntmachung des Hinweises auf die Patenterteilung: **15.06.2016**
(21) Anmeldenummer: 06807485.5
(22) Anmeldetag: 23.10.2006
(51) Int. Cl.: H04L 29/08

(54) **VERFAHREN UND PEER-NETZWERK ZUR ERMITTLUNG DER PEER-NETZWERK-HERKUNFTSSTATION EINER DATEI**
METHOD AND PEER NETWORK FOR ASCERTAINING THE PEER NETWORK ORIGINATING STATION FOR A FILE
PROCEDE ET RESEAU EGAL-A-EGAL POUR LA DETERMINATION D'UN POSTE D'ORIGINE DE RESEAU EGAL-A-EGAL D'UN FICHIER

(30) Priorität: 05.12.2005 DE 102005058006
(43) Veröffentlichungstag der Anmeldung: 20.08.2008
(73) Patentinhaber: Siemens Aktiengesellschaft, 80333 München (DE)
(72) Erfinder: BÄSE, Gero, 81739 München (DE); KUTKA, Robert, 82269 Geltendorf (DE); PANDEL, Jürgen, 83620 Feldkirchen-Westerham (DE)
(86) Internationale Anmeldenummer: PCT/EP2006/067678
(87) Internationale Veröffentlichungsnummer: WO 2007/065757

(56) Entgegenhaltungen:
- WO-A-2005/074597
- US-A1- 2002 052 885
- US-A1- 2002 168 082
- US-A1- 2003 185 417
- US-A1- 2005 268 102
- ZHAO J: "A WWW service to embed and prove digital copyright watermarks" PROCEEDINGS OF THE EUROPEAN CONFERENCE ON MULTIMEDIA APPLICATIONS, SERVICES AND TECHNIQUES UNIV. CATHOLIQUE LOUVAIN LOUVAIN, BELGIUM, Bd. 2, 1996, Seiten 695-709 vol.2, XP000199921

## Beschreibung

Die Erfindung betrifft ein Verfahren zur Ermittlung der Herkunftsstation einer Datei in einem Peer-Netzwerk gemäß dem Gattungsbegriff des Anspruchs 1 sowie ein Peer-Netzwerk gemäß dem Gattungsbegriff des Anspruchs 17.

Der Austausch von Informationen in heutigen Netzwerken, wie beispielsweise dem Internet, funktioniert zumeist nach dem Client-Server-Prinzip. Das bedeutet, dass ein Computer oder eine Gruppe von Computern, die einen Server darstellen, Informationen zur Verfügung stellen. Andere Netzwerkknoten oder Computer, die diese Informationen benötigen, rufen sie von dem Server ab.

Dieses Verfahren hat den Nachteil, dass die Last, die Informationen zu verteilen, ausschließlich bei dem Server liegt. Der Server muss alle Anfragen nach einer konkreten Information selbst beantworten und die Information an die entsprechenden Clients, die die Anfrage gestellt haben, verschicken. Dies ist besonders nachteilig, wenn eine bestimmte Information neu ist und daher in kurzer Zeit von sehr vielen Clients abgerufen wird. Ein Beispiel für eine solche Information ist ein Update für eine Software, beispielsweise ein Update für ein Betriebssystem. Bei solchen Informationen ist es notwendig, einen besonders belastungsfähigen Server zur Verfügung zu stellen, der in der Lage ist, die Last der Anfragen zu tragen. Ein solcher Server ist kostenintensiv. Geht in kurzer Zeit die Anzahl der Anfragen nach der Information zurück, ist der Server jedoch nicht mehr ausgelastet. Die Investition in das leistungsfähige Serversystem ist somit nach kurzer Zeit überflüssig.

Eine Alternative, die die genannten Nachteile vermeidet, sind Peer-Netzwerke. Dies sind Netzwerke aus gleichberechtigten Stationen. Ein Beispiel für solch ein Peer-Netzwerk sind die heute üblichen Peer-to-Peer-Netzwerke. Solche Peer-Netzwerke sind im Allgemeinen logische Netzwerke, zu denen sich üblicherweise ein Teil von Stationen eines größeren Netzwerks, wie z.B. des Internets, zusammenschließen.

Wichtigste Eigenschaft der Peer-Netzwerke ist, dass jede Station zugleich als Server und als Client auftreten kann. Das bedeutet, dass jede Station Informationen abrufen kann und auch Informationen zur Verfügung stellen kann. Soll nun eine neue Information, wie beispielsweise ein Software-Update zur Verfügung gestellt werden, bietet in einem Peer-Netzwerk automatisch jede Station den Teil des Software-Updates, der bereits auf dieser Station gespeichert ist, zum Download für andere Stationen des Peer-Netzwerkes an.

Im Allgemeinen ist weiterhin ein Server notwendig, der die Information, wie beispielsweise das Software-Update dem Peer-Netzwerk zumindest für den Anfang zur Verfügung stellt. Die Hauptlast der Informationsverteilung liegt nun aber nicht mehr bei diesem Server, sondern bei den Knoten des Peer-Netzwerkes. Diese Peer-Knoten sind im allgemeinen Computer von Teilnehmern des Netzwerkes. Diese Computer werden in so weit mit der Informationsverteilung belastet, wie es ihrer Ausstattung gemäß möglich ist. Dies bedeutet, dass die zusätzliche Belastung für die Benutzer dieser Computer im Allgemeinen unbemerkt bleibt und dass die Lastverteilung somit lediglich auf einer besseren Ausnutzung bereits vorhandener Ressourcen besteht.

Peer-Netzwerke können auch zur Verbreitung multimedialer Inhalte verwendet werden. Solche multimedialen Inhalte können beispielsweise Musik oder Videos sein. Dabei ist in einem gesteuerten Peer-Netz dafür gesorgt, dass die Inhaber der Rechte an den verbreiteten Inhalten entsprechend der Verbreitung vergütet werden. Hierbei ist es nicht erwünscht, spielsweise in einem weiteren, ungesteuerten Peer-Netzwerk, so ist die Herkunft einer solchermaßen weiter verbreiteten Datei nicht mehr feststellbar.

Die US 2005/0268102 A1 offenbart ein Verfahren, bei dem in eine Datei von jedem die Datei aussendenden Knoten ein jeweiliges Wasserzeichen eingefügt wird, so dass anhand der sich ergebenden Wasserzeichen ein Audit-Trail erhalten wird.

Die US 2002/0168082 A1 offenbart ein Verfahren zur Markierung von digitalen Daten mit einem digitalen Wasserzeichen in Echtzeit vor dessen Verteilung.

Die US 2003/0185417 A1 offenbart ein Verfahren zur Versionskontrolle einer Multimediadatei mithilfe von digitalen Wasserzeichen.

Die Veröffentlichung Zhao, Jian "A WWW service to embed and prove digital copyright watermarks" offenbart einen Dienst zur Nutzung von digitalen Wasserzeichen, um geschütztes Material bei der Verbreitung über das Internet zu identifizieren.

Die WO 2005/074597 offenbart ein System und ein Verfahren, mit denen digitale Arbeiten unter Verwendung eines Wasserzeichen-Gateways geschützt werden können.

Die US 2002/00512885 A1 offenbart ein Verfahren, bei dem in mittels File-Sharing zu übertragende Dateien ein Wasserzeichen integriert wird, welche zur Identifikation der zu übertragenden Dateien verwendet werden.

Die der Erfindung zugrunde liegende Aufgabe besteht darin, eine Möglichkeit anzugeben, die Herkunft einer Datei aus einem Peer-Netzwerk zu ermitteln.

Diese Aufgabe wird durch ein Verfahren zum Bereitstellen von Informationen und einer übertragenen Datei zur Ermittlung einer Herkunftsstation der in einem Peer-Netzwerk übertragenen Datei, wobei das Peer-Netzwerk Quellstationen und eine Zielstation (ZS) umfasst gemäß Anspruch 1 sowie durch ein Peer-Netzwerk gemäß Anspruch 17 gelöst.

Bei dem Verfahren werden die folgenden Schritte ausgeführt:
- Bereitstellen jeweils einer Datei mit für die jeweilige Quellstation eindeutigen Wasserzeichen, wobei die Wasserzeichen aus einer Vielzahl an Teilwasserzeichen bestehen, zumindest zwei Versionen der Dateien bereitgestellt werden, und die Wasserzeichen der Versionen unterschiedlich sind;
- Übertragen von Teilen der für die jeweilige Station eindeutig mit Wasserzeichen bereitgestellten Dateien von den Quellstationen zu der Zielstation;
- Zusammensetzen der übertragenen Teile der Dateien zu der übertragenen Datei;
- Erstellen der Informationen durch Speichern der Teilwasserzeichen der jeweils übertragenen Teile der Dateien, wobei anhand der Informationen die Zielstation als Herkunftsstation bei einem Übertragen der übertragenen Datei ermittelbar ist.

Zur Ermittlung der Herkunftsstation der Datei wird also das Wasserzeichen ermittelt, das in ihr selbst enthalten ist. Weiterhin wird dieses Wasserzeichen verglichen mit den eindeutigen Wasserzeichen, die einen Rückschluss auf die Herkunftsstation erlauben. Aus dem Ergebnis des Vergleichs kann geschlossen werden, ob die Datei von einer Station des Peer-Netzes kommt oder nicht.

Unter einem Wasserzeichen versteht man in einer digitalen Umgebung eine zusätzliche Information, die in eine beliebige Datei oder einen Teil der Datei eingebracht wird. Bei einem multimedialen Inhalt der Datei, der somit zur Darstellung für einen menschlichen Benutzer gedacht ist, kann diese zusätzliche Information mehr oder minder sichtbar sein. So gibt es deutlich sichtbare Wasserzeichen, wie beispielsweise Logos von Herstellern. Es gibt aber auch Wasserzeichen, die für den menschlichen Betrachter oder Zuhörer nicht bemerkbar sind. Beispielsweise können solche Wasserzeichen realisiert werden, indem bei einem nicht codierten Inhalt bei jedem Byte das jeweils niederwertigste Bit zur Einbringung der zusätzlichen Information, also des Wasserzeichens, verwendet wird. Eine Veränderung des niederwertigsten Bits ist für den menschlichen Betrachter nicht ersichtlich oder hörbar.

Unter Wasserzeichen wird hier die Gesamtheit der Zusatzinformation verstanden, die in eine Datei im Peer-Netzwerk eingebracht wird. Unter Teilwasserzeichen wird die Information verstanden, die aus einem kleinen Teil einer Datei entnommen werden kann. Beispielsweise kann ein Teilwasserzeichen wenige Bytes umfassen. Dies bedeutet, als Teilwasserzeichen wird diejenige zusätzliche Information verstanden, die in einem Block von wenigen Bytes Länge einer Datei enthalten ist.

In einer vorteilhaften Ausgestaltung zur Ermittlung einer Herkunftsstation einer übertragenen Datei in einem Peer-Netzwerk, wobei die übertragene Datei und Informationen wie oben beschrieben erzeugt werden, werden folgende Schritte durchgeführt:
- Ermitteln eines in der übertragenen Datei enthaltenen ersten Wasserzeichens, wobei das erste Wasserzeichen aus Teilwasserzeichen besteht;
- Vergleichen des ersten Wasserzeichens mit den Informationen;
- Ermitteln der Herkunftsstation in dem Peer-Netzwerk aus einem Ergebnis des Vergleichsschritts.

In einer vorteilhaften Ausgestaltung und Weiterbildung der Erfindung wird eine Speicherung von Informationen über im Peer-Netzwerk übertragene Teile von Dateien durchgeführt, wobei die Informationen wenigstens aus den Teilwasserzeichen in den übertragenen Teilen der Dateien bestehen.

Im Allgemeinen werden in Peer-Netzwerken Dateien in Teilen übertragen. Die Zusammensetzung der Teile ergibt somit wieder eine vollständige Datei. Daher schließen die übertragenen Teile von Dateien auch übertragene vollständige Dateien ein.

Zusätzlich zu der Übertragung von Dateien oder Teilen von Dateien im Peer-Netzwerk werden also Informationen über übertragene Teile gespeichert. Hierdurch ist es möglich, die Übertragung der Teilwasserzeichen bei allen im Peer-Netzwerk stattfindenden Übertragungen zu verfolgen. Dadurch kann das Wasserzeichen jeder Datei bei jeder Station des Peer-Netzes rekonstruiert werden.

Die gespeicherte Information besteht dabei wenigstens aus den Teilwasserzeichen in jeweils übertragenen Teilen von Dateien.

Die gespeicherte Information besteht dabei wenigstens aus den Teilwasserzeichen in jeweils übertragenen Teilen von Dateien. Das bedeutet, dass bspw. das Wasserzeichen an sich gespeichert wird, also die zusätzliche Wasserzeichen-Information, die in Dateien eingebracht wird in Form des Wasserzeichens. Alternativ ist es auch möglich, dass eine Kennzeichnung des Wasserzeichens gespeichert wird. Bspw. können verschiedene Wasserzeichen verwendet werden, die durch eine laufende Nummer identifiziert werden. In diesem Fall reicht es, die laufende Nummer für ein Teilwasserzeichen zu speichern.

In einer vorteilhaften Ausgestaltung und Weiterbildung der Erfindung werden Informationen über übertragene Teile zu einer Speicherstation übermittelt. Die Speicherstation ist eine Station im oder außerhalb des Peer-Netzes, die solche Informationen über im Peer-Netzwerk übertragene Teile von Dateien speichert. Sie kann für diesen Zweck installierter Server sein, aber auch bspw. eine Station des Peer-Netzwerks. Durch die zentralisierte Speicherung der Informationen wird die Gefahr des Missbrauchs reduziert und ein ständiger Zugriff auf die Daten ermöglicht.

Vorteilhaft werden dabei die Informationen von der Quell- oder der Zielstation an die Speicherstation übermittelt. Besonders vorteilhaft ist es, wenn die Informationen von beiden Stationen übermittelt werden. Senden sowohl Ziel- als auch Quellstation die Informationen an die Speicherstation, so wird einerseits die Fehlersicherheit erhöht und zum anderen die Missbrauchsgefahr seitens der Zielstation ZS verringert.

In einer vorteilhaften Alternative werden die Informationen dezentral im Peer-Netzwerk gespeichert. Hierdurch ist es möglich, den Aufwand, der sich aus der Speicherung der Informationen ergibt, auf die Stationen des Peer-Netzwerks zu verteilen. Hierdurch werden die Ressourcen des Peer-Netzwerks besser genutzt und der Aufwand für die Speicherung reduziert.

Vorteilhaft werden zur Markierung von Dateien in dem Peer-Netzwerk die folgenden Schritte durchgeführt:
- Bereitstellen von wenigstens zwei Versionen der Dateien, die jeweils mit wenigstens einem Wasserzeichen bestehend aus einer Vielzahl von Teilwasserzeichen versehen sind, wobei die Wasserzeichen der Versionen verschieden sind, im Peer-Netzwerk,
- bei der Übertragung wenigstens eines Teils der Datei von einer Quellstation zu einer Zielstation im Peer-Netzwerk, Übernahme der Teilwasserzeichen im Teil der Datei von der Quellstation zur Zielstation.

Im ersten Schritt werden also wenigstens zwei Versionen von Dateien im Peer-Netzwerk zur Verfügung gestellt. Die zur Verfügung gestellten Versionen enthalten dabei verschiedene Wasserzeichen. Das bedeutet, dass wenigstens ein Teil der Teilwasserzeichen voneinander verschieden sind, idealerweise jedoch eine große Anzahl der Teilwasserzeichen oder sogar alle Wasserzeichen.

Werden nun im Peer-Netzwerk Teile von solchermaßen zur Verfügung gestellten Dateien von einer Quellstation zu einer Zielstation übertragen, werden die Teilwasserzeichen, die sich in den Teilen der Dateien befinden, übernommen und sind somit auch in den Teilen der Dateien auf der Zielstation vorhanden.

Im Allgemeinen wird bei der Übertragung einer Datei in einem Peer-Netzwerk diese Datei von einer Mehrzahl von Quellen bezogen. Da in dem Peer-Netzwerk mehrere Versionen der Datei mit verschiedenen Wasserzeichen zur Verfügung stehen, werden bei der Übertragung zur Zielstation diese Wasserzeichen vermischt, da die jeweiligen Teilwasserzeichen der verschiedenen Versionen zusammen mit den entsprechenden Teilen der Datei übertragen werden. Dadurch entsteht eine Version der Datei mit einem neuen Wasserzeichen. Bei einer genügend großen Anzahl von Teilwasserzeichen in einer Datei ist jedes somit entstehende neue Wasserzeichen bei einer neuen Zielstation eindeutig und kann zur Identifikation und Ermittlung dieser Zielstation verwendet werden.

In einer vorteilhaften Weiterbildung der Erfindung werden die Versionen von Dateien dadurch erzeugt, dass zwei Kopien jeder der Dateien erzeugt werden und mit verschiedenen Wasserzeichen versehen werden. Die erzeugten Versionen werden dann bei zumindest einem Knoten im Peer-Netzwerk zur Verfügung gestellt. Es ist hierbei auch möglich, dass zwei oder mehrere Anbieterstationen im Peer-Netzwerk grundsätzlich dafür zuständig sind, die Versionen für neue Dateien zur Verfügung zu stellen.

Alternativ ist es auch möglich, dass zum Bereitstellen der Versionen die Dateien ohne ein Wasserzeichen zur Verfügung gestellt werden. Werden nun Teile der Dateien, in denen noch keine Wasserzeichen enthalten sind, übertragen, so wird automatisch diesen Teilen ein Wasserzeichen, bestehend aus einem, zwei oder mehreren Teilwasserzeichen hinzugefügt. Diese Alternative hat den Vorteil, dass automatisch eine Vielzahl verschiedener Versionen erzeugt wird und dabei die Last der Erzeugung wiederum bei den Netzwerkknoten des Peer-Netzwerkes liegt.

In einer weiteren vorteilhaften Ausgestaltung und Weiterbildung der Erfindung wird ermittelt, ob die Übertragung wenigstens eines großen Teiles einer Datei von nur einer Quellstation erfolgt und in diesem Fall die Teilwasserzeichen in zumindest dem großen Teil dieser Datei bei der Zielstation neu bestimmt. die Teilwasserzeichen können dabei verändert werden, d.h. die neuen Teilwasserzeichen stehen in einer Beziehung zu den übertragenen Teilwasserzeichen. Alternativ können sie auch unabhängig von den übertragenen Teilwasserzeichen bestimmt werden, bspw. durch zufällige Wahl.

Dadurch wird vorteilhaft vermieden, dass bei der Übertragung einer Datei von einer geringen Zahl von Quellstationen oder im schlimmsten Fall nur einer Quellstation das Wasserzeichen dieser Datei mit keinen oder nur geringfügigen Änderungen zur Zielstation übernommen wird. Dadurch wiederum wird die Eindeutigkeit der Identifikation durch das Wasserzeichen aufrechterhalten.

In einer vorteilhaften Weiterbildung der Erfindung wird zum Bereitstellen der Versionen nur eine Version der Datei im Peer-Netzwerk zur Verfügung gestellt. Die ersten Übertragungen dieser Datei erfolgen dann automatisch von nur einer oder wenigen Quellen und die übertragenen Dateien erhalten neue Teilwasserzeichen. Hierdurch werden vorteilhaft automatisch viele verschiedene Versionen dieser Datei erzeugt.

Bevorzugt wird bei dem Verfahren eine sehr große Anzahl von Teilwasserzeichen für das Wasserzeichen verwendet. Dadurch wird die Eindeutigkeit des Wasserzeichens auch bei einer sehr großen Anzahl von Peer-Netzwerk-Knoten und somit Dateiversionen gewährleistet.

Es ist möglich, dass die Teilwasserzeichen alle den gleichen Umfang aufweisen. Hierdurch wird die Verarbeitung und Auswertung erleichtert.

Alternativ ist es auch möglich, dass die Teilwasserzeichen unterschiedlichen Umfang aufweisen. Dies hat zum Vorteil, dass ein Missbrauch durch absichtliche Entfernung der Wasserzeichen aus einer Datei erschwert wird.

Bevorzugt können sich die Teilwasserzeichen wenigstens teilweise überlappen. Das bedeutet, dass zumindest in bestimmten Bytes einer Datei mehrere Wasserzeichen eingebracht sind. Dies hat den Vorteil, dass die Sicherheit der Wasserzeichen erhöht wird und eine Entfernung erschwert wird.

Bevorzugt findet die Übertragung des Teils der Datei von der Quellstation zur Zielstation in Paketen derart statt, dass wenigstens ein Teilwasserzeichen oder alle Teilwasserzeichen in dem Teil der Datei vollständig übertragen werden. Hierdurch wird gewährleistet, dass die Teilwasserzeichen auch nach der Übertragung von der Quellstation zur Zielstation identifizierbar bleiben.

Hierfür werden bevorzugt die Größe der Pakete und der Umfang eines Teilwasserzeichens derart gewählt, dass die Paketgröße ein gemeinsames ganzzahliges Vielfaches der Umfänge der Teilwasserzeichen ist. Dabei kann die Paketgröße auch gleich dem Umfang der Teilwasserzeichen sein.

Das Peer-Netzwerk besteht aus einer Mehrzahl von Netzwerkstationen. Diese können als Quellstation und als Zielstation für die Übertragung von wenigstens Teilen von Dateien funktionieren. Die Netzwerkstationen sind ausgestaltet, die Markierung sowie die Übertragung von Informationen an die Speicherstation durchzuführen.

Weitere Einzelheiten und Vorteile der Erfindung werden anhand von einem in der Zeichnung dargestellten Ausführungsbeispiel näher erläutert. Dabei zeigen:

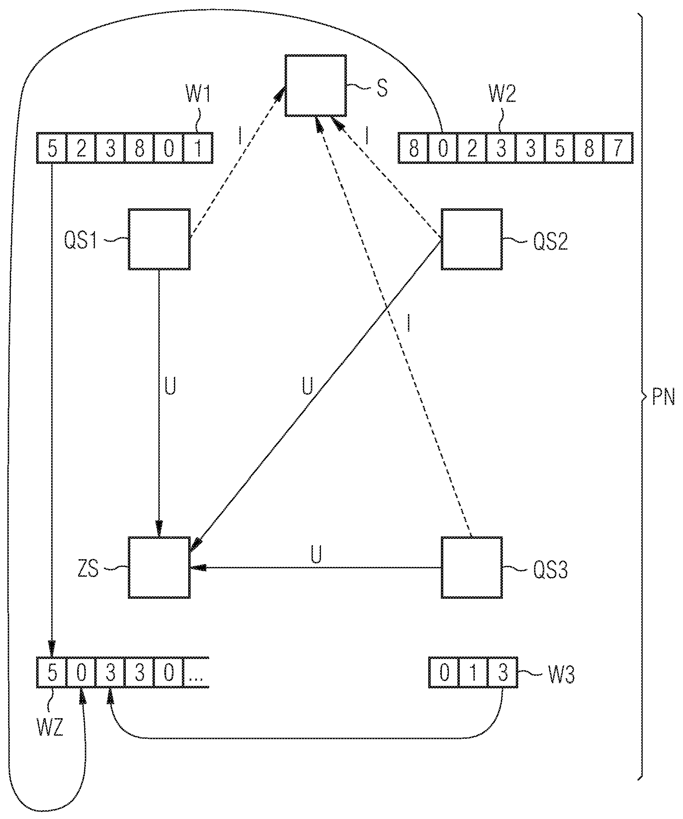

Figur 1 ein Peer-Netzwerk mit drei Quellstationen, einer Zielstation und einer Speicherstation.

Im Ausführungsbeispiel wird gezeigt, wie für eine Datei ermittelt wird, von welcher Station in einem Peer-Netzwerk PN sie stammt. Dazu ist es grundsätzlich nötig, die in dem Peer-Netzwerk verbreiteten Dateien zu markieren. Weiterhin muss das Markieren präventiv erfolgen. Wird die Herkunft einer Datei gesucht, kann zu diesem Zeitpunkt keine Markierung mehr vorgenommen werden. Weiterhin ist es nötig, Wissen über die Markierungen in den im Peer-Netzwerk PN verbreiteten Dateien zu haben. Im Ausführungsbeispiel wird dieses Wissen in einer zentralen Speichereinrichtung gespeichert.

Figur 1 zeigt, wie die Markierung mit Wasserzeichen in einem beispielhaften Peer-Netzwerk PN vorgenommen wird. In diesem Beispiel werden alle verbreiteten Dateien markiert. Alternativ ist es möglich, nur bestimmte Dateien zu markieren, bspw. Videodateien. Allerdings ist dann auch nur für diese die Ermittlung der Herkunft möglich.

Das beispielhafte Peer-Netzwerk PN enthält vier Peer-Netzwerk-Knoten, von denen in diesem Beispiel drei als Quellstation QS1...3 arbeiten, und eine als Zielstation ZS. Wie in Peer-Netzen üblich, ist es auch hier möglich, dass jede Station als Quell- oder Zielstation arbeitet.

Die Zielstation möchte nun eine Datei aus dem Peer-Netzwerk PN erhalten. Diese Datei wurde in dem Peer-Netzwerk PN in drei verschiedenen Versionen mit 3 unterschiedlichen Wasserzeichen W1...3 zur Verfügung gestellt. Diese befinden sich zumindest in Teilen auf den Quellstationen QS1...3.

Nun werden in Datenübertragungen U Teile der Datei von den Quellstationen QS1...3 an die Zielstation ZS übertragen. Die Quellstationen QS1...3 haben dabei selbst unterschiedliche Teile der Datei gespeichert.

Diese unterschiedlichen Teile enthalten unterschiedliche Wasserzeichen W1...3. Die Wasserzeichen W1...3 bestehen dabei aus Teilwasserzeichen, die hier mit unterschiedlichen Ziffern bezeichnet sind. In diesem Ausführungsbeispiel erstreckt sich ein solches Teilwasserzeichen über jeweils 1 KB der Datei. Die Datei wird bei den Übertragungen U daher jeweils in Blöcken von 1 KB Größe mit jeweils einem vollständigen Teilwasserzeichen übertragen.

Durch die Übertragungen U von den verschiedenen Quellstationen QS1...3 entsteht bei der Zielstation ein neues Wasserzeichen WZ, das sich aus den verschiedenen Teilwasserzeichen der Wasserzeichen W1...3 bei den Quellstationen QS1...3 ergibt.

Gleichzeitig mit den Übertragungen U werden Informationen I von den Quellstationen QS1...3 an die Speicherstation S übertragen. In einer alternativen Ausführungsmöglichkeit können die Informationen I auch von der Zielstation ZS oder zusätzlich von der Zielstation ZS an die Speicherstation S übertragen werden. Die Informationen I enthalten die bei den Übertragungen U übertragenen Teilwasserzeichen zusammen mit einer jeweiligen Angabe über die Position des Teilwasserzeichens in der Datei. Dadurch ist die Speicherstation S in der Lage, nach der Übertragung der vollständigen Datei an die Zielstation ZS das sich dort ergebende Wasserzeichen WZ anzugeben.

In einer alternativen Ausführungsmöglichkeit wird die Information I lediglich in der jeweiligen Quellstation QS1...3 gespeichert. Werden die Informationen I zur Identifikation benötigt, so werden die in diesem Fall dezentral gespeicherten Informationen I von den Stationen des Peer-Netzwerks PN abgerufen. In einer weiteren Alternative sendet die Zielstation ZS nach Erhalt der vollständigen Datei eine Information I an die Speicherstation S, wobei die Information I in diesem Fall das komplette neue Wasserzeichen WZ enthalten. Es ist auch möglich, die vorangegangenen Alternativen zu kombinieren. Senden sowohl Ziel- als auch Quellstation ZS, QS1...3 die Informationen I über die übertragene Datei an die Speicherstation S, so wird einerseits die Fehlersicherheit erhöht und zum anderen die Missbrauchsgefahr seitens der Zielstation ZS verringert.

Die Speicherung und/oder Übertragung der Teilwasserzeichen erfolgt dabei in der Form, dass in einer Alternative das Wasserzeichen an sich, d.h. die zusätzliche Information, die durch das Wasserzeichen in Dateien eingebracht wird, gespeichert oder übertragen wird. Alternativ kann auch ein Kennzeichen für ein Wasserzeichen übertragen und/oder gespeichert werden. Beispielsweise kann hier eine laufende Nummer für die im Peer-Netzwerk PN verwendeten Wasserzeichen gespeichert werden.

Wird die Datei nun außerhalb des Peer-Netzwerks PN verbreitet, so kann durch einen Vergleich des Wasserzeichens WZ der Datei mit den Informationen der Speicherstation S ermittelt werden, von welcher Herkunftsstation diese Datei gekommen ist.

Es ist hierbei möglich, dass ein Teil der Teilwasserzeichen, beispielsweise durch Fehler in der Übertragung U an die Zielstation ZS oder an die Speicherstation S von der Speicherstation S nicht richtig rekonstruiert werden können. Durch die große Anzahl an Teilwasserzeichen wird aber sichergestellt, dass eine solche große Anzahl an Möglichkeiten für Wasserzeichen existiert, dass selbst eine Ähnlichkeit eines Wasserzeichens mit den in der Speicherstation S gespeicherten Informationen I als Gleichheit gewertet werden kann. Ein Film von 500 MB Größe enthält gemäß diesem Beispiel 500 000 Teilwasserzeichen. Mit nur zehn verschiedenen Teilwasserzeichen ergeben sich für die beispielhafte Datei 10⁵⁰⁰⁰⁰⁰ verschiedene Wasserzeichen WZ, W1...W3.

Findet eine Zielstation ZS für die Übertragung einer Datei nur eine oder wenige Quellstationen QS1...3, so besteht die Möglichkeit, dass das Wasserzeichen WZ sich bei der Übertragung U nur unwesentlich ändert. Wird bspw. die gesamte Datei von der zweiten Quellstation QS2 an die Zielstation ZS übertragen, so ergibt sich dort das gleiche Wasserzeichen WZ wie bei der zweiten Quellstation QS2, was eine eindeutige Identifikation der Station anhand des Wasserzeichens verhindern würde. In diesem Fall ersetzt die Zielstation ZS automatisch die übertragenen Teilwasserzeichen durch neue, bspw. zufällig gewählte Teilwasserzeichen. Dadurch wird weiterhin gewährleistet, dass die Wasserzeichen WZ, W1...3 der im Peer-Netzwerk PN vorhandenen Dateien eindeutig der jeweiligen Station zuzuordnen sind. Alternativ ist es auch möglich, dass in diesem Fall die Speicherstation neue Teilwasserzeichen zur Verfügung stellt.

In einer Ausführungsmöglichkeit werden Dateien im Peer-Netzwerk PN zur Verfügung gestellt, indem eine Version der Datei zur Verfügung gestellt wird. Bei der Verbreitung dieser Version im Peer-Netzwerk findet anfänglich automatisch ein Download von nur einer oder wenigen Quellstationen QS1...3 statt. Das führt dazu, dass die Datei automatisch mit neuen Teilwasserzeichen versehen wird, wodurch viele verschiedene Versionen im Peer-Netzwerk PN entstehen.

In diesem Ausführungsbeispiel wurden zehn verschiedene Teilwasserzeichen gezeigt. Um eine größere Sicherheit vor einer mutwilligen Veränderung der Teilwasserzeichen außerhalb der Übertragungen U des Peer-Netzwerkes PN zu erschweren, kann eine größere Anzahl verschiedener Teilwasserzeichen verwendet werden. Diese können auch in unterschiedlicher Weise in die Daten der Datei eincodiert werden.

Es ist auch möglich, dass Teilwasserzeichen unterschiedlicher Größe gewählt werden. Weiterhin können diese auch überlappend eingesetzt werden. Dabei ist es sinnvoll, Dateien in Paketen zu übertragen, deren Größe ein gemeinsames ganzzahliges Vielfaches der Umfänge der Teilwasserzeichen ist. Bei Teilwasserzeichen von zehn und fünfzehn Bytes Länge könnte die Datei in Paketen von 30 Bytes Länge oder 3000 Bytes Länge übertragen werden. Dabei ist es weiterhin sinnvoll, die Teilwasserzeichen in der Datei so anzuordnen, dass sie immer vollständig innerhalb eines Pakets liegen, bspw. durch Ausrichtung an den Paketgrenzen.

Es ist möglich, über ein Incentive-Verfahren die jeweiligen Quellstationen QS1...3 oder die Zielstation ZS des Peer-Netzes PN anzuregen, die Informationen I über übertragene Teile von Dateien der Speicherstation S mitzuteilen.

## Patentansprüche

1. Verfahren zum Bereitstellen von Informationen (I) und einer übertragenen Datei zur Ermittlung einer Herkunftsstation der in einem Peer-Netzwerk (PN) übertragenen Datei, wobei das Peer-Netzwerk Quellstationen (QS1, QS2, QS3) und eine Zielstation (ZS) umfasst,
mit folgenden Schritten:
- Bereitstellen jeweils einer Datei mit für die jeweilige Quellstation (QS1, QS2, QS3) eindeutigen Wasserzeichen (W1, W2, W3), wobei
- die Wasserzeichen (W1, W2, W3) aus einer Vielzahl an Teilwasserzeichen bestehen,
- zumindest zwei Versionen der Dateien bereitgestellt werden, und
- die Wasserzeichen der Versionen unterschiedlich sind;
- Übertragen von Teilen der für die jeweilige Station eindeutig mit Wasserzeichen bereitgestellten Dateien von den Quellstationen (QS1, QS2, QS3) zu der Zielstation (ZS);
- Zusammensetzen der übertragenen Teile der Dateien zu der übertragenen Datei;
- Erstellen der Informationen (I) durch Speichern der Teilwasserzeichen der jeweils übertragenen Teile der Dateien, wobei anhand der Informationen (I) die Zielstation (ZS) als Herkunftsstation bei einem Übertragen der übertragenen Datei ermittelbar ist.

2. Verfahren zur Ermittlung einer Herkunftsstation einer übertragenen Datei in einem Peer-Netzwerk (PN), wobei die übertragene Datei und Informationen (I) gemäß Anspruch 1 erzeugt werden,
mit folgenden Schritten:
- Ermitteln eines in der übertragenen Datei enthaltenen ersten Wasserzeichens (WZ), wobei das erste Wasserzeichen (WZ) aus Teilwasserzeichen besteht;
- Vergleichen des ersten Wasserzeichens (WZ) mit den Informationen (I);
- Ermitteln der Herkunftsstation in dem Peer-Netzwerk(PN) aus einem Ergebnis des Vergleichsschritts.

3. Verfahren nach Anspruch 1 oder 2,
**dadurch gekennzeichnet, dass**
zur Speicherung die Informationen (I) an eine Speicherstation (S) im Peer-Netzwerk (PN) übermittelt werden.

4. Verfahren nach Anspruch 3,
**dadurch gekennzeichnet, dass**
die Informationen (I) durch die Quellstation (QS1, QS2, QS3) und/oder Zielstation (ZS) übermittelt werden.

5. Verfahren nach Anspruch 1 oder 2,
**dadurch gekennzeichnet, dass**
die Speicherung der Information dezentral in dem Peer-Netzwerk (PN) erfolgt.

6. Verfahren nach einem der vorangegangenen Ansprüche,
**dadurch gekennzeichnet, dass**
in den Informationen (I) das Wasserzeichen selbst oder eine Kennzeichnung des Wasserzeichens, insbesondere durch eine laufende Nummer für ein Teilwasserzeichen, gespeichert wird.

7. Verfahren nach einem der vorangegangenen Ansprüche,
**dadurch gekennzeichnet, dass**
- ermittelt wird, ob die Übertragung wenigstens eines großen Teils der Datei von nur einer der Quellstation (QS1) übertragen wird;
- falls dieser Fall eintritt, die Teilwasserzeichen in zumindest dem großen Teil dieser Datei bei der Zielstation neu bestimmt wird.

8. Verfahren nach Anspruch 7,
**dadurch gekennzeichnet, dass**
die neu bestimmten Teilwasserzeichen in einer Beziehung zu den übertragenen Teilwasserzeichen bestimmt werden.

9. Verfahren nach Anspruch 7,
**dadurch gekennzeichnet, dass**
die neu bestimmten Teilwasserzeichen unabhängig von den übertragenen Teilwasserzeichen, insbesondere durch zufällige Wahl, bestimmt werden.

10. Verfahren nach einem der vorangegangenen Ansprüche,
**dadurch gekennzeichnet, dass**
eine große Anzahl von Teilwasserzeichen verwendet wird.

11. Verfahren nach einem der vorangegangenen Ansprüchen,
**dadurch gekennzeichnet, dass**
Teilwasserzeichen verwendet werden, die alle einen gleichen Umfang aufweisen.

12. Verfahren nach einem der Ansprüche 1 bis 10,
**dadurch gekennzeichnet, dass**
Teilwasserzeichen verwendet werden, die einen unterschiedlichen Umfang aufweisen.

13. Verfahren nach einem der vorangegangenen Ansprüchen,
**dadurch gekennzeichnet, dass**
Teilwasserzeichen verwendet werden, die sich wenigstens teilweise überlappen.

14. Verfahren nach einem der vorangegangenen Ansprüchen,
**dadurch gekennzeichnet, dass**
die Übertragung des Teils der Datei von der Quellstation (QS1, QS2, QS3) zur Zielstation (ZS) in Paketen derart durchgeführt wird, dass wenigstens ein Teilwasserzeichen oder alle Teilwasserzeichen in dem Teil der Datei vollständig übertragen werden.

15. Verfahren nach Anspruch 14,
**dadurch gekennzeichnet, dass**
als Größe der Pakete ein gemeinsames ganzzahliges Vielfaches der Umfänge der Teilwasserzeichen gewählt wird.

16. Verfahren nach einem der vorangehenden Ansprüche,
**dadurch gekennzeichnet, dass**
die Informationen (I) derart gestaltet werden, dass die bei den Übertragungen übertragenen Teilwasserzeichen zusammen mit einer jeweiligen Angabe über die Position des Teilwasserzeichens in der Datei enthalten sind.

17. Peer-Netzwerk (PN),
mit einer Mehrzahl von Netzwerkstationen, die als Quellstationen (QS1, QS2, QS3) und als Zielstation (ZS) arbeiten,
**dadurch gekennzeichnet, dass**
das Peer-Netzwerk (PN) derart ausgestaltet ist, dass ein Verfahren gemäß einem der vorangegangenen Ansprüche durchführbar ist.

## Claims

1. Method for providing information (I) and a transmitted file for determining an originating station of the file transmitted in a peer network (PN), wherein the peer network comprises source stations (QS1, QS2, QS3) and a destination station (ZS),
having the following steps:
- providing a file in each case having watermarks (W1, W2, W3) unique to the respective source station (QS1, QS2, QS3), wherein
- the watermarks (W1, W2, W3) are provided with a plurality of sub-watermarks,
- at least two versions of the files are provided, and
- the watermarks of the versions are different;
- transmitting parts of the files uniquely provided with watermarks for the respective station from the source stations (QS1, QS2, QS3) to the destination station (ZS);
- assembling the transmitted parts of the files into the transmitted file;
- creating the information (I) by storing the sub-watermarks of the parts of the files transmitted in each case, wherein the destination station (ZS) for a transmission of the transmitted file can be determined as the originating station on the basis of the information (I).

2. Method for determining an originating station of a transmitted file in a peer network (PN), wherein the transmitted file and information (I) according to claim 1 are generated,
having the following steps:
- determining a first watermark (WZ) contained in the transmitted file, wherein the first watermark (WZ) consists of sub-watermarks;
- comparing the first watermark (WZ) with the information (I);
- determining the originating station in the peer network (PN) from a result of the comparison step.

3. Method according to claim 1 or 2,
**characterised in that**
the information (I) is transmitted to a storage station (S) in the peer network (PN) for storage.

4. Method according to claim 3,
**characterised in that**
the information (I) is transmitted by the source station (QS1, QS2, QS3) and/or destination station (ZS).

5. Method according to claim 1 or 2,
**characterised in that**
the information is stored non-centrally in the peer network (PN).

6. Method according to one of the preceding claims,
**characterised in that**
the watermark itself or an identifier of the watermark, in particular a sequential number for a sub-watermark, is stored in the information (I).

7. Method according to one of the preceding claims, **characterised in that**
- it is determined whether the transmission of at least one large part of the file is performed by only one of the source stations (QS1);
- if this case occurs, the sub-watermarks in at least the large part of said file are redefined at the destination station.

8. Method according to claim 7,
**characterised in that**
the redefined sub-watermarks are defined in relation to the transmitted sub-watermarks.

9. Method according to claim 7,
**characterised in that**
the redefined sub-watermarks are defined independently of the transmitted sub-watermarks, in particular by random selection.

10. Method according to one of the preceding claims,
**characterised in that**
a large number of sub-watermarks are used.

11. Method according to one of the preceding claims, **characterised in that**
sub-watermarks are used which are all equal in size.

12. Method according to one of claims 1 to 10,
**characterised in that**
sub-watermarks are used which are different in size.

13. Method according to one of the preceding claims,
**characterised in that**
sub-watermarks are used which at least partially overlap.

14. Method according to one of the preceding claims,
**characterised in that**
the part of the file is transmitted from the source station (QS1, QS2, QS3) to the destination station (ZS) in packets in such a way that at least one sub-watermark or all sub-watermarks in the part of the file are transmitted in full.

15. Method according to claim 14,
**characterised in that**
a common integral multiple of the sizes of the sub-watermarks is chosen as the size of the packets.

16. Method according to one of the preceding claims,
**characterised in that**
the information (I) is structured in such a way that the sub-watermarks transmitted in the transmissions are contained in the file together with a respective indication of the position of the sub-watermark.

17. Peer network (PN),
comprising a plurality of network stations operating as source stations (QS1, QS2, QS3) and as destination station (ZS), **characterised in that**
the peer network (PN) is embodied in such a way that a method according to one of the preceding claims can be carried out.

## Revendications

1. Procédé de mise à disposition d'informations (I) et d'un fichier transmis pour déterminer une station d'origine du fichier transmis dans un réseau Peer (PN), le réseau Peer comprenant des stations sources (QS1, QS2, QS3) et une station cible (ZS), comportant les étapes suivantes :
- mise à disposition de respectivement un fichier avec des filigranes univoques (W1, W2, W3) pour la station source respective (QS1, QS2, QS3),
- les filigranes (W1, W2, W3) étant composés d'une pluralité de filigranes partiels,
- au moins deux versions des fichiers étant mises à disposition et
- les filigranes des versions étant différents ;
- transmission, des stations sources (QS1, QS2, QS3) vers la station cible (ZS), de parties des fichiers mis à disposition de manière univoque pour la station respective avec des filigranes ;
- assemblage des parties des fichiers transmises pour obtenir le fichier transmis ;
- création des informations (I) par sauvegarde des filigranes partiels des parties des fichiers respectivement transmises, les informations (I) permettant de déterminer la station cible (ZS) en tant que station d'origine lors d'une transmission du fichier transmis.

2. Procédé pour déterminer une station d'origine d'un fichier transmis dans un réseau Peer (PN), le fichier transmis et des informations (I) étant générés selon la revendication 1, comportant les étapes suivantes :
- détermination d'un premier filigrane (WZ) contenu dans le fichier transmis, le premier filigrane (WZ) étant composé de filigranes partiels,
- comparaison du premier filigrane (WZ) avec les informations (I),
- détermination de la station d'origine dans le réseau Peer (PN) à partir d'un résultat de l'étape de comparaison.

3. Procédé selon la revendication 1 ou 2, **caractérisé en ce que**, aux fins de la sauvegarde, les informations (I) sont transmises à une station de stockage (S) dans le réseau Peer (PN).

4. Procédé selon la revendication 3, **caractérisé en ce que** les informations (I) sont transmises par la station source (QS1, QS2, QS3) et/ou la station cible (ZS).

5. Procédé selon la revendication 1 ou 2, **caractérisé en ce que** la sauvegarde de l'information s'effectue de manière décentralisée dans le réseau Peer (PN).

6. Procédé selon l'une des revendications précédentes, **caractérisé en ce que** sont stockés, dans les informations (I), le filigrane lui-même ou une identification du filigrane, en particulier par un numéro d'ordre pour un filigrane partiel.

7. Procédé selon l'une des revendications précédentes, **caractérisé en ce que**
- il est déterminé si la transmission d'au moins une grande partie du fichier est transmise par uniquement l'une des stations sources (QS1),
- si ce cas se présente, les filigranes partiels sont déterminés à nouveau au moins dans la grande partie de ce fichier au niveau de la station cible.

8. Procédé selon la revendication 7, **caractérisé en ce que** les filigranes partiels redéterminés sont déterminés dans une relation avec les filigranes partiels transmis.

9. Procédé selon la revendication 7, **caractérisé en ce que** les filigranes partiels redéterminés sont déterminés indépendamment des filigranes partiels transmis, en particulier par un choix aléatoire.

10. Procédé selon l'une des revendications précédentes, **caractérisé en ce qu'**un grand nombre de filigranes partiels est utilisé.

11. Procédé selon l'une des revendications précédentes, **caractérisé en ce que** sont utilisés des filigranes partiels qui présentent tous une même étendue.

12. Procédé selon l'une des revendications 1 à 10, **caractérisé en ce que** sont utilisés des filigranes partiels qui présentent une étendue différente.

13. Procédé selon l'une des revendications précédentes, **caractérisé en ce que** sont utilisés des filigranes partiels qui se chevauchent au moins en partie.

14. Procédé selon l'une des revendications précédentes, **caractérisé en ce que** la transmission de la partie du fichier de la station source (QS1, QS2, QS3) vers la station cible (ZS) est effectuée en paquets de telle sorte qu'au moins un filigrane partiel ou tous les filigranes partiels dans la partie du fichier sont complètement transmis.

15. Procédé selon la revendication 14, **caractérisé en ce qu'**est choisi, en tant que taille des paquets, un multiple entier commun des étendues des filigranes partiels.

16. Procédé selon l'une des revendications précédentes, **caractérisé en ce que** les informations (I) se présentent de telle sorte que les filigranes partiels transmis lors des transmissions sont contenus avec une mention respective de la position du filigrane partiel dans le fichier.

17. Réseau Peer (PN), comportant une pluralité de stations de réseau qui opèrent en tant que stations sources (QS1, QS2, QS3) et en tant que station cible (ZS), **caractérisé en ce que** le réseau Peer (PN) est conçu de telle sorte qu'un procédé selon l'une des revendications précédentes peut être exécuté.
